# EUROPÄISCHE PATENTSCHRIFT

(11) **EP 0 894 698 B1**
(45) Veröffentlichungstag und Bekanntmachung des Hinweises auf die Patenterteilung: **12.06.2002**
(21) Anmeldenummer: 98112016.5
(22) Anmeldetag: 30.06.1998
(51) Int. Cl.: B62D 21/15

(54) **Querträger für Fahrzeuge**
Frame crossbeam for vehicles
Poutre transversale de châssis de véhicules

(30) Priorität: 31.07.1997 DE 19733191
(43) Veröffentlichungstag der Anmeldung: 03.02.1999
(73) Patentinhaber: Dr.Ing.h.c. F. Porsche Aktiengesellschaft, 70435 Stuttgart (DE)
(72) Erfinder: Baumgärtner, Frank, 76689 Karlsdorf-Neuthard 2 (DE)

(56) Entgegenhaltungen:
- EP-A- 0 718 157
- EP-A- 0 854 066
- DE-A- 19 517 921
- PATENT ABSTRACTS OF JAPAN vol. 009, no. 107 (M-378), 11. Mai 1985 & JP 59 230847 A (SHOWA DENKO KK), 25. Dezember 1984

## Beschreibung

Die Erfindung betrifft einen Querträger für Fahrzeuge nach dem Oberbegriff des Patentanspruches 1.

Es ist aus der DE 195 17 918 A1 ein Fahrzeugrahmen bekannt, der einen Längsträger sowie einen am vorderen Ende des Längsträgers mit diesem verbundenen Querträger umfaßt. Der Querträger weist einen über die Querschnittshöhe des Längsträgers reichenden Verbindungsflansch auf, der einseitig mit dem Längsträger verschweißt ist. Auf der dem Längsträger gegenüberliegenden Seite des Verbindungsflansches stützt sich der Querträger über ein Querschnittsbereich an dem Verbindungsflansch ab, wobei dieser Querschnittsbereich eine geringere Höhe aufweist als der Längsträger. Im Verformungsfall verformt sich zunächst der Verbindungsflansch und der Querträger dringt aufgrund seines am Verbindungsflansch kleinen Querschnittsbereiches zunächst gegen einen geringen Widerstand in den Längsträger ein. Eine Verformung des Querträgers ist nicht offenbart.

Aus der gattungsbildenden JP 59 - 230 847 A geht ein aus Kunststoff gefertigter Stoßfänger hervor, der aus einem blasgeformten Hohlkammerprofil besteht. Eine vordere und eine rückseitige Platte sind jeweils mit einer Sicke versehen, die sich in Längsrichtung des Stoßfängers erstreckt. Beide Sicken sind durch eine Zwischenwand verbunden, so dass im Stoßfänger zwei parallel verlaufende Kammern ausgebildet sind. Die Frontplatte des Stoßfängers ist durch die Sicke in zwei Aufprallflächen aufgeteilt, die durch schräg angestellte Stege gegenüber dem übrigen Querschnitt abgestützt sind.

Aus der EP 0 718 157 A1 ist eine Stoßstange für Fahrzeuge bekannt geworden, die aus einem aus einer Leichmetalllegierung stranggepressten Profil besteht. Durch Zwischenwände sind verschiedene längsverlaufende Kammern gebildet. Die einzige Aufprallfläche ist durch mehrere Stege gegenüber dem übrigen Querschnitt abgestützt. Gemäß einem Ausführungsvorschlag sollen diese Stege ausgebaucht sein, um die Festigkeit in diesem Querschnittsbereich gezielt zu vermindern.

Die nicht vorveröffentlichte, ältere EP 0 854 066 A1 zeigt einen Aufbau für einen aus Blech gefertigten Stoßfänger eines Kraftfahrzeuges. Der querverlaufende Teil des Stoßfängers steht dabei aus einem U-förmigen Grundprofil, in dem ein zweites, elastisch wirkendes Profil gehalten ist. Dieses zweite Profil besteht gemäß einer möglichen Ausführung aus einem ebenfalls U-förmigen Profil, dessen vordere, als Aufprallfläche wirkende Fläche durch eine längsverlaufende Sicke in zwei Flächen aufgeteilt ist. Diese beiden Flächen sind durch eine aufgeschweißte Frontplatte unlösbar miteinander verbunden.

Es ist demgegenüber Aufgabe der Erfindung, einen Querträger zu schaffen, der im Verformungsfall ein kontrolliertes Deformationsverhalten bei gleichzeitig guter Energieabsorption aufweist.

Diese Aufgabe wird erfindungsgemäß mit den Merkmalen des Patentanspruches 1 gelöst.

Erfindungsgemäß wird vorgeschlagen, am Querträger zumindest zwei Aufprallflächen vorzusehen und die Aufprallflächen über paarweise angeordnete Stege gegenüber dem übrigen Querschnitt des Querträgers abzustützen. Die einer Aufprallfläche zugeordneten Stege sind jeweils gleichsinnig schräg zu einer Aufprallrichtung angestellt. Die Anstellrichtungen für unterschiedliche Aufprallflächen sind hingegen gegensinnig gewählt. Hierdurch ist ein in dieser Weise ausgebildeter erster Querschnittsbereich des Querträgers vergleichsweise weich ausgebildet und leitet ohne dass Kraftspitzen entstehen, die Verformung des Querträgers ein. Von besonderem Vorteil ist es hierbei, dass durch die paarweise angeordneten und schräg angestellten Stege eine Bewegung quer zur Aufprallrichtung ausführen. Da die Stege an unterschiedlichen Aufprallflächen gegensinnig angestellt sind, erfolgt auch eine Bewegung der Aufprallflächen in unterschiedliche Richtungen, so dass die Aufprallfläche insgesamt im Laufe des Verformungsvorganges vergrößert wird. Hiermit einher geht auch eine Erhöhung des Widerstandsmomentes quer zur Aufprallrichtung, so dass ein Ausweichen des Querträgers quer zur Aufprallrichtung unterbunden werden kann. Ebenfalls von besonderem Vorteil ist es, dass durch die Querbewegung der Aufprallflächen die umliegenden Bereiche verformt werden und somit bei einem Aufprall ein Abbau der Aufprallenergie nicht allein durch Verformungen in Längsrichtung, sondern zusätzlich durch Verformungen in Querrichtungen erreicht wird, so dass insgesamt die Aufprallenergie mit einer geringeren Längsverformung abgebaut werden kann.

Vorteilhafte Weiterbildungen der Erfindung sind in den Unteransprüchen enthalten.

So wird zur Ausbildung des ersten Querschnittsbereiches weiter vorgeschlagen, diesen so auszubilden, daß die schräg angestellten Stege an Längsseiten der Aufprallflächen angeordnet sind. Hierbei sind die Fußpunkte derjenigen Stege, die voneinander gegenüberliegenden Längsseiten der Aufprallflächen ausgehen, miteinander verbunden. Diese geometrische Form kann besonders einfach dadurch erzielt werden, daß eine zunächst einstückig ausgeführte Aufprallfläche in etwa mittig mit einer Hohlkehle in Längsrichtung des Querträgers versehen ist. Diese Hohlkehle kann beispielsweise V-förmig oder U-förmig ausgeführt sein.

Zur Ausbildung des Querträgers wird ferner vorgeschlagen, anschließend an den zuvor beschriebenen ersten Querschnittsbereich einen zweiten Querschnittsbereich vorzusehen, der in Verformungsrichtung steifer als der erste Querschnittsbereich ausgebildet ist. Vorzugsweise sind die seitlichen Wandungen des zweiten Querschnittsbereiches als Fortsetzungen der äußeren Stege des ersten Querschnittsbereiches ausgeführt. Zusätzlich ist ein mittlerer Steg vorgesehen, der von den verbundenen Fußpunkten der inneren Stege ausgeht. Diesen zweiten Querschnittsbereich kommt die Aufgabe zu, nach Erschöpfung des Verformungsweges des ersten Querschnittsbereiches bei der Aufprallenergie durch Verformung abzubauen. Dadurch, daß der zweite Querschnittsbereich als Fortsetzung des ersten Querschnittsbereiches ausgebildet ist, können Kraftspritzen sicher vermieden werden.

Schließlich wird vorgeschlagen, anschließend an den zweiten Querschnittsbereich einen dritten Querschnittsbereich vorzusehen, der steifer als der zweite Querschnittsbereich ausgebildet ist. Diesem dritten Querschnittsbereich kommt die Aufgabe zu, die Grundsteifigkeit des Querträgers sicherzustellen, so daß die am Querträger während der Verformung des ersten und des zweiten Querschnittsbereiches auftretenden Kräfte in die sich anschließende Tragstruktur des Fahrzeuges, beispielsweise die Längsträger, eingeleitet werden können. Dieser dritte Querschnittsbereich ist daher so steif ausgeführt, daß er weder während der Verformung des ersten und des zweiten Querschnittsbereiches noch während der sich unmittelbar anschließenden weiteren Krafteinleitung wesentlich verformt wird.

Es ist besonders darauf hinzuweisen, daß die vorteilhafte Ausbildung des ersten Querschnittsbereiches auch mit beliebigen zweiten Querschnittsbereichen (wenn kein dritter Querschnittsbereich vorgesehen ist) oder mit beliebigen zweiten und dritten Querschnittsbereichen kombinierbar ist.

Die Erfindung ist nachstehend anhand des in den Figuren dargestellten Ausführungsbeispieles näher erläutert. Es zeigen:
- Fig. 1: einen Querschnitt durch einen erfindungsgemäßen Querträger im unverformten Zustand und
- Fig. 2 bis 6: Querschnitt durch den Längsträger während der Verformung eines ersten und eines zweiten Querschnittsbereiches.

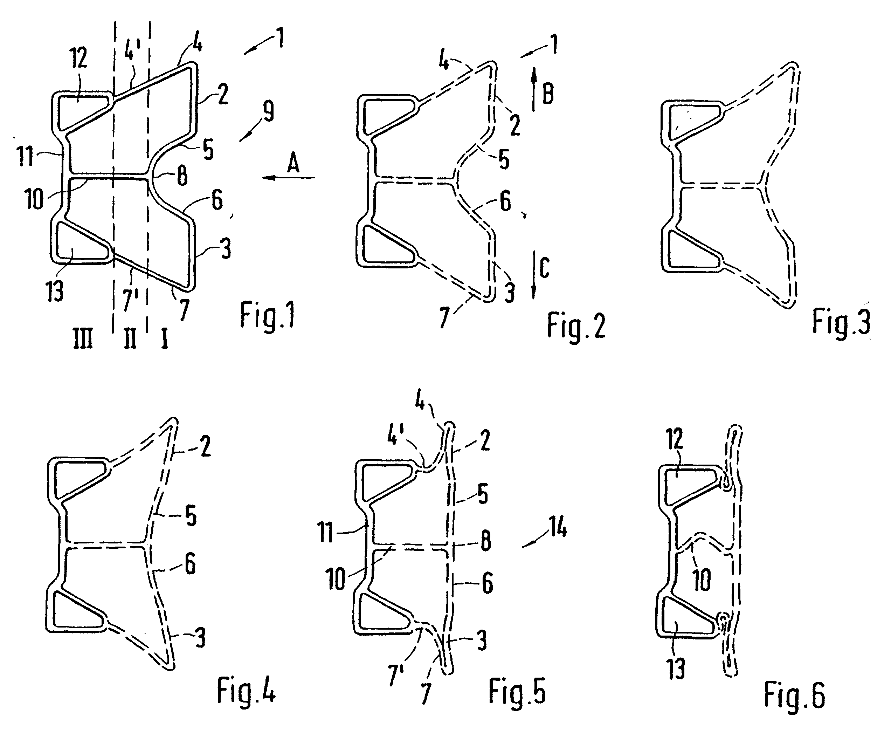

Fig. 1 zeigt einen Querträger 1, der im vorliegenden Ausführungsbeispiel als Aluminium-Strangpreß-Hohlprofil ausgeführt ist. Das Profil 1 weist drei Querschnittsbereiche I, II und III auf. Mit A ist eine Aufprallrichtung eingezeichnet; aus dieser Richtung erfolgt eine Krafteinleitung in den Querträger 1.

Der Querträger 1 ist an einem Fahrzeug (nicht dargestellt) im vorderen Bereich des Fahrzeuges angebaut und dient dazu, bei einem Aufprall des Fahrzeuges auf ein Hindernis in einer ersten Phase einen Teil der Aufprallenergie durch Verformung des Querträgers 1 aufzunehmen und in einer zweiten Phase Aufprallenergie in einer Rahmenstruktur des Fahrzeuges einzuleiten. Der Querträger 1 ist zum Anbau an das Fahrzeug in nicht näher dargestellter Weise an seiner der Aufprallrichtung A abgewandten Seite an die Rahmenstruktur des Fahrzeuges angebunden und kann darüber hinaus mit Verkleidungsteilen überdeckt sein. Diese Verkleidungsteile können auch am Querträger 1 gehalten sein.

Der Querträger 1 weist drei Querschnittsbereiche I, II und III auf, die in Aufprallrichtung A aufeinanderfolgend angeordnet sind.

Der erste Querschnittsbereich 1 weist zwei Aufprallflächen 2, 3 auf, die in einer Ebene liegend und im wesentlichen senkrecht zur Aufprallrichtung A angeordnet sind. An Längsseiten der Aufprallflächen 2, 3 schließen sich Stege 4 bis 7 an. Die äußeren Stege 4, 7 sind an den äußeren Längsseiten der zugehörigen Aufprallflächen 2, 3 angeordnet. Die inneren Stege 5, 6 sind an der inneren, einander gegenüberliegenden Längsseiten der Aufprallflächen 2, 3 angeordnet und an einem Fußpunkt 8 miteinander verbunden. Die von der ersten Aufprallfläche 2 ausgehenden Stege 4, 5 sind zur Aufprallrichtungt A nach unten geneigt und zueinander im wesentlichen parallel angeordnet. Im Gegensatz hierzu sind die in der zweiten Aufprallfläche 3 zugeordneten Stege 6, 7 zur Aufprallrichtung A hin steigend und ebenfalls im wesentlichen zueinander parallel angeordnet. Im Ausführungsbeispiel bilden die inneren Stege 5, 6 eine Hohlkehle 9 zwischen den Aufprallflächen 2 und 3.

Der zweite Querschnittsbereich II besteht aus drei Stegen 4', 7' und 10. Die äußeren Stege 4' und 7' sind Fortsetzungen der äußeren Stege 4 und 7 des ersten Querschnittsbereiches I. Der mittlere Steg 10 setzt am Fußpunkt 8 an und stützt auf diese Weise die inneren Stege 5, 6 des ersten Querschnittsbereiches I an einer Bodenplatte 11 ab.

Der dritte Querschnittsbereich III besteht aus zwei geschlossenen Profilen 12, 13 mit jeweils dreieckigem Querschnitt, die durch die Bodenplatte 11 miteinander verbunden sind.

Insgesamt ist der Querträger 1 als Hohlstrangprofil mit vier Kammern ausgebildet und daher aufgrund der geringen Anzahl an inneren Stegen (mittlerer Steg 10 und innerer Abschnitt der Profile 12, 13) zur Herstellung im Extursionsverfahren besonders geeignet. Für die Darstellung der Verformung des Querträgers 1 bei einem Aufprall in der Aufprallrichtung A wird angenommen, daß der Aufprall auf einen flachen Gegenstand, der sich senkrecht zur Aufprallrichtung A erstreckt, erfolgt.

Fig. 2 zeigt den Querträger 1 unmittelbar nach Beginn der Krafteinleitung in Folge eines Aufpralls. Aufgrund der eingeleiteten Kraft reichen die Stege 4, 5 in Pfeilrichtung B und die Stege 6, 7 in Pfeilrichtung C aus. Hiermit einher geht eine Verlagerung der ersten Aufprallfläche 2 im Pfeilrichtung B sowie eine Verlagerung der zweiten Aufprallfläche 3 in Pfeilrichtung C.

Fig. 3 zeigt eine weitere Verformung im vorgenannten Sinne aufgrund einer weiteren Krafteinleitung.

Wie in Fig. 4 dargestellt, sind in Folge der Verformung die inneren Stege 5, 6 nun bereits soweit umgeklappt, daß sie zusammen mit den Aufprallflächen 2, 3 eine (hier noch nicht ebene) Fläche bilden.

Wie in Fig. 5 dargestellt, ist nun eine durchgehende Aufprallfläche 14, bestehend aus den Aufprallflächen 2 und 3 sowie den inneren Stegen 5 und 6 gebildet. Die äußeren Stege 4, 7 sind ebenfalls vollständig umgelegt und liegen rückseits der Aufprallflächen 2, 3 an diesen an. In Folge dieses Umklappens stehen nun die Abschnitte 4' und 7' der äußeren Stege 4 und 7, die zum zweiten Querschnittsbereich II gehören, annähernd parallel zur Aufprallrichtung A. Bei dem in Fig. 5 gezeigten Zustand ist der Verformungsweg des ersten Querschnittsbereiches I vollständig aufgebraucht, während der zweite Verformungsbereich II sowie der dritte Verformungsbereich III noch im wesentlichen unverformt sind.

In Fig. 6 schließlich ist auch der zweite Querschnittsbereich II verformt. Die durch die Verformung der äußeren Stege 4, 7 bereits zuvor angeknickten Abschnitte 4' und 7' sind nunmehr vollständig zusammengefaltet. Der mittlere Steg 10, der in dem in Fig. 5 dargestellten Zustand noch nicht ausgeknickt war. Das Ausknicken des mittleren Steges 10 wird dadurch erleichtert, daß sich der mittlere Steg 10 durch den dritten Querschnittsbereich III hindurch bis zur Bodenplatte 11 erstreckt, so daß eine ausreichende Knicklänge vorhanden ist.

Es ist darauf hinzuweisen, daß auch in dem in Fig. 6 dargestellten Verformungszustand die Profile 12, 13 und somit der dritte Querschnittsbereich III nicht verformt sind. Auch bei einer weiteren Krafteinleitung wird der dritte Querschnittsbereich ill nicht stärker verformt, sondern die in Aufprallrichtung A eingeleiteten Kräfte werden nunmehr an die Rahmenstruktur des Fahrzeuges weitergegeben, mit der der Querträger 1 verbunden ist.

Zusammenfassend hat die dargestellte Struktur des Querträgers 1 die Wirkung, daß eine Verformung des Querträgers 1 die Aufprallfläche während der Verformung vergrößert und somit das Widerstandsmoment erhöht wird. Darüber hinaus wird durch die Querbewegung der Aufprallflächen 2, 3 zusätzlich Aufprallenergie durch eine Verformung in Querrichtung absorbiert, so daß die Verformung in der Aufprallrichtung A vermindert ist.

## Patentansprüche

1. Querträger (1) für Fahrzeuge, wobei der Querträger als Hohlstrangprofil ausgebildet ist und zumindest zwei Aufprallflächen (2, 3) aufweist, die über schräg angestellte Stege (4 bis 7) gegenüber dem übrigen Querschnittsbereich (II, III) des Querträgers abgestützt sind, **dadurch gekennzeichnet, dass** die einer Aufprallfläche (2, 3) paarweise zugeordneten Stege (5, 4 und 6, 7) jeweils gleichsinnig schräg zu einer Aufprallrichtung (A) angestellt sind und die Anstellrichtung (A) für unterschiedliche Aufprallflächen gegensinnig gewählt ist.

2. Querträger nach Anspruch 1, **dadurch gekennzeichnet, dass** an einander gegenüberliegenden Längsseiten der Aufprallflächen (2,3) innere Stege (5,6) und an den äußeren Längsseiten der Aufprallflächen äußere Stege (4,7) angeordnet sind, wobei die inneren Stege an ihrem von den Aufprallflächen entfernt liegenden Fußpunkten (8) miteinander verbunden sind.

3. Querträger nach Anspruch 2, **dadurch gekennzeichnet, dass** sich an den aus den Aufprallflächen (2,3), den inneren Stegen (5,6) und den äußeren Stegen (4,7) gebildeten ersten Querschnittsbereich (I) ein zweiter Querschnittsbereich (II) anschließt, der kastenförmig ausgebildet ist, wobei seitliche Wandungen des zweiten Querschnittsbereiches als Fortsetzung der äußeren Stege (4, 7) ausgebildet sind und der zweite Querschnittsbereich einen mittleren Steg (10) aufweist, der von den verbundenen Fußpunkten (8) der inneren Stege (5, 6) ausgeht.

4. Querträger nach Anspruch 3, **dadurch gekennzeichnet, dass** sich an den zweiten Querschnittsbereich (II) ein dritter Querschnittsbereich (III) anschließt, wobei der dritte Querschnittsbereich aus zwei miteinander verbundenen, geschlossenen Profilen (12, 13) besteht.

## Claims

1. A transverse member (1) for vehicles, the transverse member being constructed in the form of a hollow extruded section and having at least two impact faces (2, 3) which are supported by way of obliquely positioned webs (4 to 7) with respect to the remaining cross-sectional region (**II**, **III**) of the transverse member, **characterized in that** the webs (5, 4 and 6, 7) associated in pairs with one impact face (2, 3) are each positioned in the same direction obliquely to one impact direction (**A**) and the impact direction (**A**) is selected to be in an opposite direction for different impact faces.

2. A transverse member according to Claim 1, **characterized in that** inner webs (5, 6) are arranged on mutually opposite longitudinal sides of the impact faces (2, 3) and outer webs (4, 7) are arranged on the outer longitudinal sides of the impact faces, wherein the inner webs are connected to each other at their bases (8) remote from the impact faces.

3. A transverse member according to Claim 2, **characterized in that** the first cross-sectional region (**I**) formed by the impact faces (2, 3), the inner webs (5, 6) and the outer webs (4, 7) is adjoined by a second cross-sectional region (**II**) which is constructed in the form of a box, wherein lateral walls of the second cross-sectional region are constructed as a continuation of the outer webs (4, 7) and the second cross-sectional region comprises a middle web (10) which starts from the joined bases (8) of the inner webs (5, 6).

4. A transverse member according to Claim 3, **characterized in that** the second cross-sectional region (**II**) is adjoined by a third cross-sectional region (**III**), wherein the third cross-sectional region comprises two closed sections (12, 13) connected to each other.

## Revendications

1. Traverse (1) pour véhicules, la traverse étant réalisée sous la forme d'un profilé extrudé creux et comportant au moins deux surfaces d'impact (2, 3) qui sont soutenues, par des entretoises (4 à 7) disposées obliquement, par rapport à la zone de section transversale (II, III) restante de la traverse, **caractérisée en ce que** les entretoises (5, 4 et 6, 7) associées deux par deux à une surface d'impact (2, 3) sont inclinées dans le même sens obliquement par rapport à une direction d'impact (A) et la direction d'inclinaison (A) est choisie avec le même sens pour différentes surfaces d'impact.

2. Traverse selon la revendication 1, **caractérisée en ce que** sur des côtés longitudinaux opposés l'un à l'autre des surfaces d'impact (2, 3) sont disposées des entretoises intérieures (5, 6) et, sur les côtés longitudinaux extérieurs des surfaces d'impact, sont disposées des entretoises extérieures (4, 7), les entretoises intérieures étant reliées entre elles au droit de leurs points de pied (8) éloignés des surfaces d'impact.

3. Traverse selon la revendication 2, **caractérisée en ce qu'**à la première zone de section transversale (I), formée par les surfaces d'impact (2, 3), des entretoises intérieures (5, 6) et des entretoises extérieures (4, 7), fait suite une deuxième zone de section transversale (II) qui est en forme de caisson, des parois latérales de la deuxième zone de section transversale étant réalisées en tant que prolongement des entretoises extérieures (4, 7) et la deuxième zone de section transversale présentant une entretoise centrale (10) qui part des points de pied (8) reliés des entretoises intérieures (5, 6).

4. Traverse selon la revendication 3, **caractérisée en ce qu'**à la deuxième zone de section transversale (II) fait suite une troisième zone de section transversale (III), la troisième zone de section transversale étant constituée de deux profilés (12, 13) fermés reliés entre eux.
